Europäisches Patentamt

**European Patent Office**

Office européen des brevets

(11) Publication number: **0 087 570**
A1

# EUROPEAN PATENT APPLICATION

(21) Application number: 83100501.2

(22) Date of filing: 20.01.83

(51) Int. Cl.³: **G 01 N 31/08**
**G 01 N 1/00**

(30) Priority: 01.03.82 US 444812

(43) Date of publication of application:
07.09.83 Bulletin 83/36

(84) Designated Contracting States:
CH FR GB LI NL

(71) Applicant: THE PERKIN-ELMER CORPORATION
Main Avenue
Norwalk Connecticut 06856(US)

(72) Inventor: Scott, Raymond P.W.
625 Ridgebury Road
Ridgefield Connecticut 06877(US)

(74) Representative: Patentanwälte Grünecker, Dr.
Kinkeldey, Dr. Stockmair, Dr. Schumann, Jakob, Dr.
Bezold, Meister, Hilgers, Dr. Meyer-Plath
Maximilianstrasse 58
D-8000 München 22(DE)

(54) Column injection apparatus.

(57) A column injection apparatus (10) wherein the center flow of fluid is conveyed by a conduit (12) beyond the crown (36) of the column (18) includes a center flow conduit (12) affixed to a cap (14) such that, when the cap (14) is attached to a chromatographic column (18), the conduit (12) penetrates the packing (24) of the column (18) beyond the crown (36) thereof.

EP 0 087 570 A1

## COLUMN INJECTION APPARATUS

### Background of the Invention

The present invention generally relates to a sample injection apparatus for use with a liquid chromatography column and, in particular, relates to an apparatus wherein the sample conduit extends into the packing of the column to which the apparatus is affixed.

One of the most critical operations in the liquid chromatographic analysis of a sample is the introduction of the sample containing fluid onto the chromatographic separation column. The critical nature of sample introduction can best be understood by recognizing that, once introduced into a column, the bandwidth of the sample only increases. Thus, to maintain reasonable separations, it is critical for a sample to be introduced with the narrowest possible bandwidth.

Historically, the best method of sample injection has been by means of a hypodermic syringe that penetrated a few millimeters into the center of the column packing. An excellent review of the effect of different prior art methods of sample injection is presented in an article by J.J. Kirkland in Gas Chromatography, 1972; Applied Science Publishers for the Institute of Petroleum, London, England (1972) p. 39 et seq. and in an article by Kirkland, et al., Journal of Chromatographic Science, Vol. 15, (1979) p. 303 et seq. The use of a hypodermic syringe can, of course, be accomplished only in conjunction with a septum injection system. The effective use of a hypodermic syringe with continuous solvent flow is, however, limited to column pressures of less than about 2000 p.s.i. Beyond such column pressures it is nearly impossible to eject the sample from the syringe. Thus, as most modern liquid chromatography systems operate at column pressures in excess of 3000 p.s.i., the use of hypodermic syringes is quite diminished and relatively sporadic.

At relatively high column pressures, i.e., where the use of a hypodermic syringe is ineffective, it is conventional to utilize a sampling

**0087570**

valve arrangement wherein sample is delivered to the column by means of a pumping mechanism. At present, in such systems, the sample is almost always directed through a conduit which terminates at the center of the top frit of the column above the packed bed thereof. In this fashion, the sample is discharged directly onto the center of the frit and preferably carried onto the column by a curtain flow of solvent surrounding the center conduit. As an alternative, it is known that the conduit can extend through a hole in the frit to discharge the sample directly onto the top of the packing.

More recently, the art of column injection has developed to effectively eliminate the use of a separate center flow plus a separate curtain flow. Much present day effort is directed toward developing and refining various mechanisms for radially distributing a solvent/sample mixture. In such mechanisms, the mixture is introduced onto the column above the packing and is passed through a plate or a set of screens to distribute the mixture across the cross-section of the column prior to the mixture reaching the packing material.

It has been determined that such sample introduction mechanisms may actually accelerate the deterioration of a separating column. The combined use of relatively small packing material, i.e., material of 3 to 5 micrometer diameter, and increasingly higher column pressures, i.e., about 5000 p.s.i., invariably causes the packing material of even an ideally packed column to resettle within the column. Such resettling results in the formation of a crown at the top of the column which is either totally void of packing material or has a total void and a layer of irregularly or loosely packed material.

## Summary of the Invention

Accordingly, it is one object of the present invention to provide a column injection apparatus which not only deters the formation of a crown but maintains and/or regains column efficiency should a crown form or exist.

This object is accomplished, at least in part, by an apparatus including an injection conduit, through which a sample containing fluid may be pumped, affixed to a column termination cap which conduit extends beyond the cap a distance greater than any existing or anticipated crown thickness.

Other objects and advantages will become apparent to those skilled in the art upon reading the following detailed specification in conjunction with the appended drawing.

## Brief Description of the Drawing

The drawing, not drawn to scale, includes:

Figures 1A and 1B, which are diagrams of apparatus embodying the principles of the present invention;

Figures 2A and 2B, which are diagrams of alternative embodiments of sample/solvent delivery mechanisms;

Figures 3A and 3B, which are chromatograms of comparative analyses employing newly packed chromatographic columns;

Figures 4A and 4B, which are chromatograms of comparative analyses employing a previously deteriorated chromatographic columns;

Figures 5A through 5D, which are comparative chromatograms for various center flow/curtain flow ratios utilizing an extremely deteriorated chromatographic column; and

Figures 6A through 6C, which are comparative chromatograms for various center flow/curtain flow ratios utilizing a new column.

## Detailed Description of the Invention

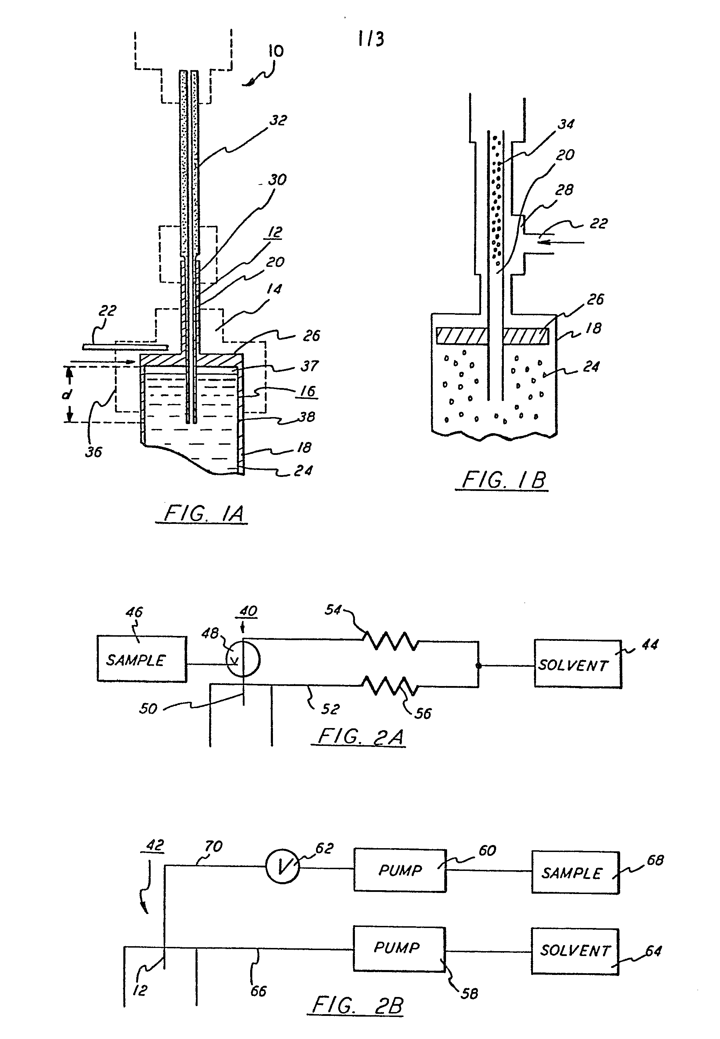

An apparatus, generally indicated at 10 in Figure 1A, embodying the principles of the present invention, includes a sample delivery tube 12 affixed to, and extending through, a cap 14, which cap 14 is designed to be connected to one end 16 of a chromatographic column 18, by means of a receiving tube 20. For reasons more fully discussed below, the sample delivery tube 12 preferably extends a preselected distance beyond the cap 14. In one embodiment, the cap 14 includes a curtain flow conduit 22 through which a curtain flow of solvent material can be introduced onto the packing 24 of the column 18. The embodiment shown in Figure 1A additionally includes a means 26 for distributing the curtain flow of solvent across the cross-section of the column 18. The means 26 can be any such mechanism known in the art such as a scintered frit disc or a plurality of screens or a radial distribution plate. Although a scintered disc is preferred, any means 26 can be employed so long as the curtain flow of solvent is distributed, i.e., the curtain flow about the sample delivery tube 12 is created, prior to reaching the packing 24 of the column 18. Thus, while the curtain flow conduit 22 is shown in Figure 1A as entering the cap 14 just above the distributing means 26, it could also be connected, for example, by means of a 'T' junction 28 shown in Fig. 1B along the receiving tube 20 protruding from the cap 14.

As well known in the art, it is highly desirable to minimize dispersion of the sample fluid prior to the introduction thereof onto the column 18. To this end, the sample delivery tube 12, in the embodiment shown in Figure 1A is comprised of an inner tube 30 having an outside diameter of about 0.75 millimeters and an inside diameter of about 0.25 millimeters. For support and rigidity, the tube 30 is affixed within an outer tube 32 having an inside diameter of about 0.75 millimeters and an outside diameter of about 1.5 millimeters. The tubes, 30 and 32, can be affixed together by any means known in the art, for example, by soldering techniques. Additionally, the outside diameter of the outer tube 32 is chosen so as to mate with conventional plumbing-like unions and/or 'T' junctions.

An alternative sample delivery tube 12 design which also achieves minimum dispersion of the sample containing fluid is shown in Figure 1B. Therein, the sample delivery tube 12 has an inside diameter on the order of about 0.5 millimeters and is packed with a plurality of glass beads 34 having an average diameter of about 35 micrometers. Preferably, the glass beads 34 are scintered at about 700°C to stabilize the subsequent packing thereof in the sample delivery tube 12. Either of these sample delivery tubes 14 can be used in the apparatus 10.

In either embodiment, the sample delviery tube 12 must have a length such that, when the cap 14 is affixed to the column 18, it extends beyond the distribution means 26 a preselected distance 'd' so that is passes through a crown 36 at the top of the column 18. As more fully discussed below, the crown 36 comprises a void 37 and/or a layer 38 of irregularly or loosely packed
material. The depth of the crown 36 is usually less than about 8 millimeters.
Thus, in the practical embodiment of the apparatus 10, the sample delivery tube
12 extends beyond the cap 14 a distance equal to the thickness of the
distributing means 26 plus about 8 millimeters.

For assembly purposes, if the sample delivery tube 12 is not packed
with the scintered glass beads 34, a length of wire, for example stainless
steel, is passed through the tube 12 so that it terminates at the end to be
placed in the packing 24. When the tube 12 is secured, the wire is removed and
hence no column packing 24 will have entered the tube 12.

The fluid flow to the sample delivery tube 12 and the curtain flow
conduit 22 is preferably provided and controlled by either of two different
systems, 40 and 42, shown in Figure 2 A and 2B respectively.

Referring specifically to Figure 2A, the system 40 shown therein
includes a solvent source 44, a sample source 46, a mixing valve 48, a center
flow conduit 50 and a curtain flow conduit 52. As shown, the center flow
conduit 50 includes a first hydraulic resistor 54 in-line therewith and the
curtain flow conduit 52 includes a second hydraulic resistor 56 in-line
therewith. As shown, solvent from the solvent source 44 is directed according
to the relative values of the resistors, 54 and 56, into the center flow conduit
50 and the curtain flow conduit 52. By means of the mixing valve 48, the
solvent from the center flow conduit 50 is mixed with the sample fluid prior to
introduction thereof into the sample delivery tube 12. The major advantage of
the system 40 is that it is readily adaptable for use in solvent gradient
analysis. Preferably, in this embodiment, the hydraulic, or flow, resistors, 54
and 56, can be conduit sections having inside diameters which are selected to
introduce the appropriate flow resistance, although other types of hydraulic
resistor elements could also be used.

Referring to Figure 2B, the system 42 includes two pumps, a solvent
fluid pump 58 and a sample fluid pump 60, the sample fluid pump 60 is in-line
with a sample valve 62. The solvent pump 58 connects a solvent source 64 to the
center flow conduit 22 by means of a solvent conduit 66. The sample pump 60
connects a sample source 68 with the sample delivery tube 12 via a sample conduit 70. The major advantage of the system 42 is that ratio of curtain flow
to center flow is easily and simply adjusted. Such an arrangement can be
desirable in the recovery of deteriorated columns wherein the most effective
flow ratio can be experimentally ascertained.

The performance characteristics of the above-described embodiments .
is discussed hereinafter by reference to four specific examples. The
examples which follow all utilize a test sample having a five component
mixture of benzene, toluene, ethylbenzene, isopropylbenzene and tertiary
butylbenzene as a 0.25% v/v solution in the mobile phase solution. The
sample volume was 1 microliter.

Example 1.

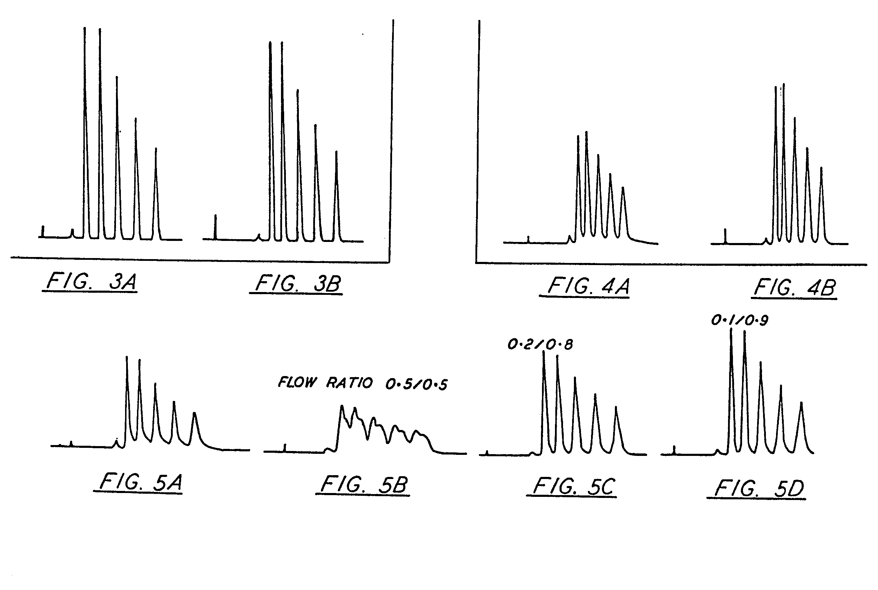

Although the present apparatus was particularly developed to
improve, or extend, the life of deteriorated columns, it has been found, see,
for example, Figures 3A and 3B, to be at least as good as conventional
injection mechanisms when used with well packed new columns.

Referring to Figures 3A and 3B. In this particular example, a new
well packed column was examined utilizing a configuration employing the
relatively narrow tube structure shown in Figure 1A and the dual pump
configuration shown in Figure 2B. The resulting chromatograms are shown in
Figures 3A and 3B. 3A demonstrates the peaks obtained during use of a normal
injection device, i.e., where the sample fluid was introduced at or just
beyond the frit of the new column. In the experimental technique employing
the present invention, a center flow to curtain flow ratio of 0.5/0.5 was
utilized. As will be easily observable from Figure 3, the efficiencies
yielded by the column measured with a normal injection system are about
equal, i.e, about 8900 theoretical plates compared to about 8700 theoretical
plates when the present injection apparatus was utilized. This difference is
well within the error of measurement and close to the theoretical design.
From this example, it will be recognized that the present injection apparatus
can be interchanged or used in place of modern present day injection
apparatus without loss of separation accuracy or column efficiency.

Example 2.

Next, a deteriorated column was measured utilizing a normal or conventional injection apparatus and yielded a theoretical plate number of about 1600 and, as shown in Figure 4A, the end peaks are tailing. As shown in Figure 4B, however, the efficiency, i.e., the theoretical plates, of the column, is greatly increased, to about 3900 theoretical plates, by use of the present column injection apparatus using a center flow to curtain flow ratio of approximately 0.5/0.5 and the peaks are more symmetrical. It should also be pointed out that in the recovery of this deteriorated column, the configuration shown in Figure 2A was employed where the hydraulic resistors, 54 and 56, or restrictors, of the conduits were made approximately equal.

Example 3.

A column having a relatively large void or crown, i.e., about 6 mm, was next subjected to examination employing both a conventional injection system and an embodiment of the present invention and wherein the flow ratio was varied to obtain the maximum efficiency. The first chromatogram on the extreme left represents a chromatogram received from using a conventional injection system and was determined to have an efficiency of about 2000 theoretical plates. The present apparatus including the double pump delivery system, shown in Fig. 2B, was utilized. As indicated, when the center flow/curtain flow ratio was 0.5/0.5, the efficiency of the column was extremely poor to the extent of yielding double peaks. Some improvement was gained when the flow ratio was 0.2/0.8. However, a reasonable, if not exceptional, performance was obtained when the flow ratio of 0.1/0.9 (depicted on the extreme right) was utilized. The efficiency for the column on the extreme right was determined to be about 2000 theoretical plates.

Although the efficiencies for the chromatograms shown in Figures 5A and 5D are about equal, i.e., about 2000 theoretical plates, the symmetry of the peaks have been vastly improved by use of an apparatus embodying the principles of the present invention. Such column efficiencies can occur even with poor peak symmetry since the efficiency is determined using measurements taken at about the 0.67 height point of the peak. Thus, it will be observed that not only is the efficiency maintained or improved, but the quality of the peaks, i.e., the symmetry, is improved.

In a practical method for utilizing, or rejuvenating, a deteriorated column, the most advantageous center flow/curtain flow ratios can be initially ascertained utilizing the double pump arrangement shown in Figure 2B. Subsequently, an arrangement such as shown in Figure 2A can then be provided wherein the flow restrictors 54 and 56 provide the previously determined ratios.

Example 4.

In this example, the columns tested were new and not previously tested. The top three chromatograms were derived from the use of conventional injection means whereas the lower chromatograms were obtained utilizing an injection apparatus embodying the principles of the present invention.

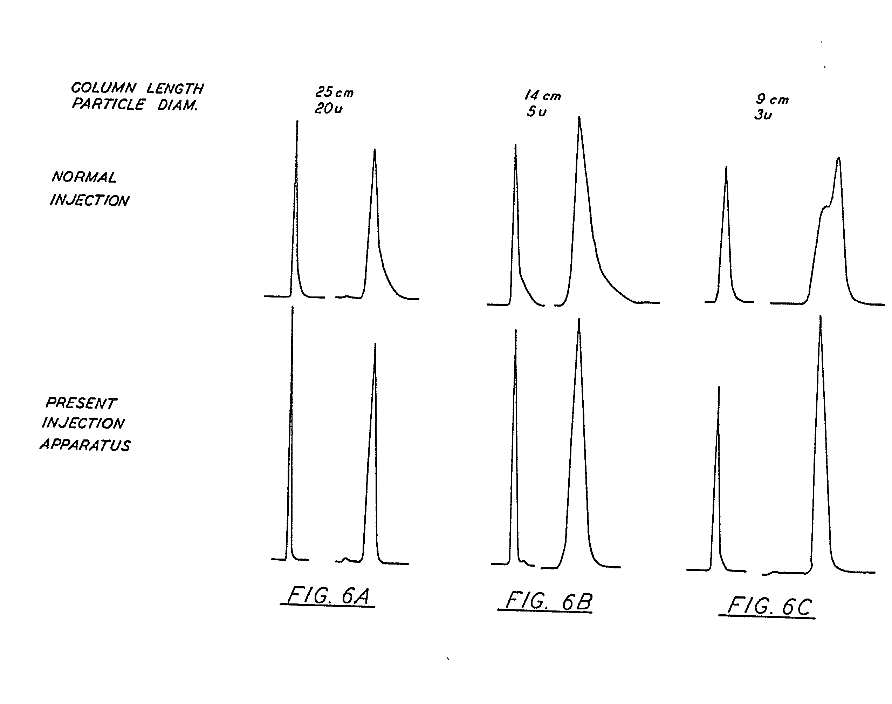

While there was significant improvement in chromatograms for the 20 micrometer and 5 micrometer columns, the comparative chromatograms for the 3 micrometer column (Figure 6C) demonstrates an exceptionally practical improvement. That is, based on the upper chromatogram, this column would have been rejected as it exhibited double-peaks, but, when used with the present injection apparatus, it exhibited excellently defined and symmetrical peaks. Thus, by use of the present injection apparatus, what would have been a useless column can now be used with accurate results.

Hence, the inescapable conclusion is that the column injection apparatus described herein yields results which are at least as good as that presently achievable by conventional injection mechanisms or configurations. In addition, it is conceivable and practical through the use of the present column injection apparatus to recover and extend the life of even extremely deteriorated columns. Such recovery or life extension has been unheard of heretofore in the art.

Although certain specific embodiments and examples have been described herein, other configurations and modifications can be made to the present apparatus without departing from the scope and spirit of the invention herein. Thus, the description herein is considered to be exemplary and not limiting in any fashion and the present invention is deemed to be limited only by the claims appended hereto and the reasonable interpretation thereof.

What Is Claimed Is:

1. Apparatus for injecting a sample containing fluid and a solvent fluid into a packed liquid chromatographic column; said apparatus comprising:

a sample injection conduit through which said sample containing fluid may be pumped, said conduit being adapted to be fitted through an opening in a column end cap, said conduit being of such a length that it penetrates into the packing of said column when said end cap is affixed to said column; and

means for introducing a solvent fluid around said conduit, said means being adapted to convey said solvent fluid through said end cap.

2. Apparatus as claimed in Claim 1 further including:

means for conveying said sample containing fluid by a predetermined portion of said solvent fluid.

3. Apparatus as claimed in Claim 1 further including:

means for regulating the fluid pressure of said solvent fluid prior to providing said solvent fluid into said means for introducing said solvent fluid.

4. Apparatus as claimed in Claim 1 further comprising:

means for dispersing said solvent fluid so as to generate a curtain flow thereof about said conduit extending into said packing.

5. Apparatus as claimed in Claim 4 wherein:

said sample injection conduit extends about 8 millimeters beyond said dispersing means.

6. Apparatus as claimed in Claim 1 further comprising:

means for controlling the ratio of sample containing fluid flow to solvent flow.

7. Apparatus as claimed in Claim 6 wherein said ratio is fixed; and

said sample flow and said solvent flow are controlled by a single pumping means.

8. Apparatus as claimed in Claim 6 wherein:

said sample flow and said solvent flow are controlled by independent pumping means.

9. A method of improving the performance of liquid chromatographic columns, said method comprises the steps of:

providing said column with a cap having a sample injection conduit extending therethrough a distance such that when said cap is affixed to said column said conduit penetrates the packing of said column beyond the crown thereof;

determining a preferred center flow to curtain flow ratio; and

providing a sample delivery conduit and a curtain flow conduit having fixed flow resistors therein which flow resistors are adapted to provide said preferred flow ratio.

FIG. IA

FIG. IB

FIG. 2A

FIG. 2B

FIG. 3A    FIG. 3B    FIG. 4A    FIG. 4B

FLOW RATIO 0·5/0·5

0·2/0·8

0·1/0·9

FIG. 5A    FIG. 5B    FIG. 5C    FIG. 5D

2/3

0087570

FIG. 6A

FIG. 6B

FIG. 6C

0087570

European Patent Office

**EUROPEAN SEARCH REPORT**

**0087570**
Application number

EP 83 10 0501

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A,D | JOURNAL OF CHROMATOGRAPHIC SCIENCE, vol. 15, Augu st 1977, Evanston J.J. KIRKLAND et al. "Sampling and extra-column effects in high-performance liquid chromatography; influence of peak skew on plate count calculations", pages 303-316 * Page 311, left-hand column, line 3 - page 315, right-hand column, line 9; figures 13, 16, 17 * | 1-4,6, 9 | G 01 N 31/08 G 01 N 1/00 |
| A | DE-A-2 040 835 (VARIAN ASSOCIATES) * Claim 1; page 1, chapter "Zusammenfassung"; page 4, line 4 - page 5, second paragraph; figures 1, 2 * | 1-4,6, 8,9 | |
| A | US-A-3 103 807 (A.B. BROERMAN) * Claim 1; column 3, lines 3-18; figures 1, 2 * | 1,5,9 | TECHNICAL FIELDS SEARCHED (Int. Cl. ³) G 01 N 1/00 G 01 N 31/08 |
| A | DE-A-2 604 166 (HEWLETT-PACKARD GMBH) * Claim 1; page 4, line 4 - page 5; figures 1, 2 * | 1,9 | |
| A | DE-B-2 905 160 (HEWLETT-PACKARD GMBH) * Claims 1, 3; column 2, line 61 - column 3, line 8; figure * | 2,3,6, 7 | |
| | --- -/- | | |

The present search report has been drawn up for all claims

| Place of search BERLIN | Date of completion of the search 20-05-1983 | Examiner HOFMANN D G |
|---|---|---|

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl. 3) |
|---|---|---|---|
| A | DE-A-1 673 285 (VARIAN ASSOCIATES) <br> * Claims 1, 2, 8, 9; figures 1, 2 * <br><br> --- | 2,3,6, 8 | |
| A | Patent Abstracts of Japan vol. 5, no. 38, 12 March 1981 & JP-A-55-160848 <br><br> ----- | 1 | |

TECHNICAL FIELDS SEARCHED (Int. Cl. 3)

The present search report has been drawn up for all claims

| Place of search <br> BERLIN | Date of completion of the search <br> 20-05-1983 | Examiner <br> HOFMANN D G |
|---|---|---|